# EUROPEAN PATENT APPLICATION

(11) **EP 1 659 303 A1**
(43) Date of publication of application: **24.05.2006**
(21) Application number: 04772026.3
(22) Date of filing: 23.08.2004
(51) Int. Cl.: F16C 11/04, F16C 33/10, F16C 33/12, E02F 3/38

(54) **SLIDING BEARING ASSEMBLY AND SLIDING BEARING**

(30) Priority: 25.08.2003 JP 2003300005
(71) Applicant: HITACHI CONSTRUCTION MACHINERY CO., LTD., Bunkyo-ku, Tokyo 112-0004 (JP)
(72) Inventor: AKITA, Hideki, Hitachi Constr. Machinery Co. Ltd., Tsuchiura-shi, Ibaraki 3000013 (JP); GOKITA, Osamu, Hitachi Constr. Machinery Co. Ltd., Tsuchiura-shi, Ibaraki 3000013 (JP); ISOGAI, Tooru, Hitachi Constr. Machinery Co. Ltd., Tsuchiura-shi, Ibaraki 3000013 (JP)
(74) Representative: Beetz & Partner
(86) International application number: PCT/JP2004/012065
(87) International publication number: WO 2005/019664

(57) **Abstract**

In a slide bearing assembly 12 comprising a shaft 22 and a bushing 16 which is made of a porous sintered material having a large number of pores 25, the bushing 16 is impregnated with a lubricant 24 containing 2.0 to 30 wt% of solid lubricating fine particles 26 made of at least one selected from among MoS₂, WS₂, and hexagonal BN, and the shaft 22 and the bushing 16 are used at surface pressure not lower than 6 Kgf/mm² and sliding speed in the range of 2 to 5 cm/sec. This realizes prolongation of a period during which sliding operation can be continued in an oilless self-lubricating state even under a situation of sliding at a very low speed or angular motion in a very small stroke.

## Description

### Technical Field

The present invention relates to a slide bearing assembly and a slide bearing, more particularly to a slide bearing assembly and a slide bearing, which can ensure sliding operation for a longer period in an oilless self-lubricating state even under a situation of sliding at a very low speed or angular motion in a very small stroke.

### Background Art

In an excavator used as a construction machine or the like, to operate a driving mechanism, members constituting the driving mechanism are coupled to each other in a relatively rotatable or angularly movable manner and are driven by cylinders or other actuators. In a working device of a hydraulic excavator, for example, an arm is coupled to a fore end of a boom and a bucket is coupled to a fore end of the arm. During excavation, an arm cylinder and a bucket cylinder are driven to rotate or angularly move the arm about a joint between the arm and the boom and the bucket about a joint between the bucket and the arm, respectively, thereby excavating earth and sand, etc. Those joints are each constituted by a slide bearing assembly comprising a shaft and a bushing.

In one known slide bearing assembly, a porous bushing made of an iron-based sintered alloy is impregnated with a lubricant (see, e.g., Patent Reference 1). In the known slide bearing assembly, when a shaft and the bushing slide relative to each other, the lubricant impregnated in the bushing seeps out to a sliding interface with generation of frictional heat to form a thin lubricant film. Therefore, grease is no longer required to be kept interposed between the shaft and the bushing. Also, because fluidity of the lubricant impregnated in the bushing is very low, the lubricant is avoided from spilling out. As a result, the slide bearing assembly can ensure the sliding operation for a comparatively long period in an oilless self-lubricating state even under a situation of sliding at a very low speed or angular motion in a very small stroke.
Patent Reference 1: Japanese Patent No. 2832800

### Disclosure of the Invention

However, the related art described above has the following problem.

In the related art, the lubricant impregnated in the bushing is caused to seep out with the frictional heat generated by the relative sliding of the shaft and the bushing. Accordingly, for example, when the shaft and the bushing slide just several millimeters, i.e., angularly move in a very small stroke, or slide at a very low speed relative to each other, the lubricating effect cannot be developed at a sufficient level. This may raise local surface pressure and cause local abrasion or damage, such as scratching, in the surface of the shaft or the inner circumference surface of the bushing with accompanying abnormal noise.

The present invention has been made in view of the above-described problem with the related art, and an object of the present invention is to provide a slide bearing assembly and a slide bearing, which can ensure sliding operation for a longer period in an oilless self-lubricating state even under a situation of sliding at a very low speed or angular motion in a very small stroke.
(1) To achieve the above object, the present invention provides a slide bearing assembly comprising at least a shaft and a bushing, the bushing being made of a porous sintered material having a large number of pores, wherein the bushing is impregnated with a lubricant containing 2.0 to 30 wt% of solid lubricating fine particles made of at least one selected from among MoS₂, WS₂, and hexagonal BN, and wherein the shaft and the bushing are used at surface pressure not lower than 6 Kgf/mm² and sliding speed in the range of 2 to 5 cm/sec.
   In the present invention, when the shaft and the bushing slide relative to each other, the lubricant impregnated in the pores of the bushing is caused to seep out onto the inner circumferential surface of the bushing with generated frictional heat, thereby forming a thin lubricant film. At this time, the solid lubricating fine particles contained in the lubricant are also caused to move onto the inner circumferential surface of the bushing. Thus, the solid lubricating fine particles come into a sliding interface between the bushing and the shaft together with the lubricant, and fine layers constituting the solid lubricating fine particles slide in the layer lying direction so as to develop a superior lubricating effect. When the relative sliding of the shaft and the bushing is stopped, the lubricant forming the thin lubricant film in the sliding interface is drawn back into the large number of pores of the bushing 16 based on the capillary phenomenon together with the solid lubricating fine particles. Because the fluidity of the lubricant impregnated in the pores is very low, the spilling-out loss of the lubricant and the solid lubricating fine particles is very small even when the shaft and the bushing repeat the sliding. As a result, the lubricant containing the solid lubricating fine particles can be supplied with stability for a long period.
   With the slide bearing assembly constituted as the above-mentioned structure of the related art, as a comparative example, in which the lubricant does not contain the solid lubricating fine particles, when the shaft and the bushing slide just several millimeters, i.e., angularly move in a very small stroke, or slide at a very low speed relative to each other, the lubricating effect cannot be developed at a sufficient level because the amount of generated frictional heat is insufficient. This may raise local surface pressure and cause local abrasion or damage, such as "scratching", in the surface of the shaft or the inner circumferential surface of the bushing with accompanying abnormal noise.
   In contrast, with the slide bearing assembly of the present invention, superior tribological characteristics are obtained with the lubricating effect of the solid lubricating fine particles contained in the lubricant. Further, by setting the content of the solid lubricating fine particles to fall in the range of 2.0 to 30 wt%, a superior effect of improving the load withstand characteristic can be obtained. Consequently, even under a situation of sliding at a very low speed or angular motion in a very small stroke, it is possible to not only suppress local abrasion or damage of the surface of the shaft and the inner circumferential surface of the bushing caused by scratching, etc. and accompanying abnormal noise, but also to prolong the period during which the sliding operation can be continued in the oilless self-lubricating state.
(2) To achieve the above object, the present invention also provides a slide bearing assembly comprising at least a shaft and a bushing, the bushing being made of a porous sintered material having a large number of pores, wherein the bushing is impregnated with a lubricant containing 3.0 to 5.0 wt% of solid lubricating fine particles made of graphite, and wherein the shaft and the bushing are used at surface pressure not lower than 6 Kgf/mm² and sliding speed in the range of 2 to 5 cm/sec.
(3) In above (1) or (2), preferably, viscosity of the lubricant containing the solid lubricating fine particles is in the range of 56 to 1500 cSt (at 25.5°C).
   Generally, if the lubricant viscosity exceeds 1500 cSt, the fluidity of the lubricant is reduced and a capillary phenomenon acting to return the lubricant into the pores of the bushing is less likely to occur. This results in a difficulty in making the porous sintered alloy (i.e., the bushing) impregnated with the lubricant.
   According to the present invention, since the viscosity of the lubricant containing the solid lubricating fine particles is in the range not exceeding 1500 cSt, the above-mentioned trouble can be avoided and a stable sliding characteristic can be maintained for a long term.
(4) In above (1) or (2), preferably, the bushing is made of a composite sintered alloy with a porosity of 5 to 30 vol%, the large number of pores are communicated with one another, and the bushing is subjected to surface modification treatment using at least one selected from among carburizing, nitriding, and sulphurize-nitriding.
   By forming, e.g., a carburized layer with a thickness of about 1 mm to 3 mm (preferably 2 mm) on a sliding surface of the bushing relative to the shaft with the surface modification treatment, the wear-resistance characteristic of the bushing can be improved.
(5) In above (1) or (2), preferably, the solid lubricating fine particles have sizes being small enough to prevent clogging of the pores of the bushing.
(6) In above (1) or (2), preferably, the shaft is subjected to surface modification treatment by performing at least one kind of treatment selected from among carburizing, induction hardening, laser hardening and nitriding, and then chemical conversion or sulfurizing treatment.
   The wear-resistance characteristic of the shaft can be improved with the surface modification treatment. In addition, by performing the surface modification treatment using an extreme-pressure additive such as Zn (zinc), Mn (manganese) or S (sulfur) through a step of carburizing, induction hardening, laser hardening or nitriding, and then a step of chemical conversion or sulfurizing treatment on the shaft surface, "wetting" with respect to the lubricant impregnated in the bushing is improved, whereby the lubricating effect and tribological characteristics can be further improved.
(7) To achieve the above object, the present invention further provides a slide bearing made of a porous sintered material having a large number of pores and impregnated with a lubricant containing 2.0 to 30 wt% of solid lubricating fine particles made of at least one selected from among MoS₂, WS₂, and hexagonal BN, the bearing being used at surface pressure not lower than 6 Kgf/mm² and sliding speed in the range of 2 to 5 cm/sec.
(8) To achieve the above object, the present invention still further provides a slide bearing made of a porous sintered material having a large number of pores and impregnated with a lubricant containing 3.0 to 5.0 wt% of solid lubricating fine particles made of graphite, the bearing being used at surface pressure not lower than 6 Kgf/mm² and sliding speed in the range of 2 to 5 cm/sec.
(9) In above (7) or (8), preferably, viscosity of the lubricant containing the solid lubricating fine particles is in the range of 56 cSt to 1500 cSt (at 25.5°C).
(10) In above (7) or (8), preferably, the bearing is made of a composite sintered alloy with a porosity of 5 to 30 vol%, the large number of pores are communicated with one another, and the bearing is subjected to surface modification treatment using at least one selected from among carburizing, nitriding, and sulphurize-nitriding.
(11) In above (7) or (8), preferably, the solid lubricating fine particles have sizes being small enough to prevent clogging of the pores.
(12) In above (7) or (8), preferably, the bearing is used in combination with a shaft subjected to surface modification treatment by performing at least one kind of treatment selected from among carburizing, induction hardening, laser hardening and nitriding, and then chemical conversion or sulfurizing treatment.
(13) In above (7) or (8), preferably, the bearing is used as a bearing for a front component of an excavator.
(14) In above (7) or (8), preferably, the bearing is used as a bearing for an arm of a crane.

### Brief Description of the Drawings

Fig. 1 is a side view showing an overall structure of a hydraulic excavator equipped with one embodiment of a slide bearing assembly of the present invention.
Fig. 2 is a sectional view showing an internal structure of one embodiment of the slide bearing assembly of the present invention.
Fig. 3 is a graph showing a load withstand characteristic of a bushing when solid lubricating fine particles are contained at various concentrations in a lubricant used in one embodiment of the slide bearing assembly of the present invention.
Fig. 4 is a graph showing the relationship between the content of MoS₂ and the viscosity of the lubricant containing MoS₂ in one embodiment of a slide bearing assembly of the present invention.
Fig. 5 is a schematic partial sectional view, in an enlarged scale, of a bushing and a shaft in the vicinity of their sliding surfaces, which constitute one embodiment of the slide bearing assembly of the present invention.
Fig. 6 is a graph showing a load withstand characteristic of a bushing when solid lubricating fine particles are contained at various concentrations in a lubricant used in another embodiment of the slide bearing assembly of the present invention.

### Reference Numerals

- 12: slide bearing assembly
- 16: busing (slide bearing)
- 22: shaft
- 24: lubricant
- 25: pore
- 26: solid lubricating fine particle
- 26': solid lubricating fine particle

### Best Mode for Carrying Out the Invention

Embodiments of a slide bearing assembly and a slide bearing of the present invention will be described below with reference to the drawings.

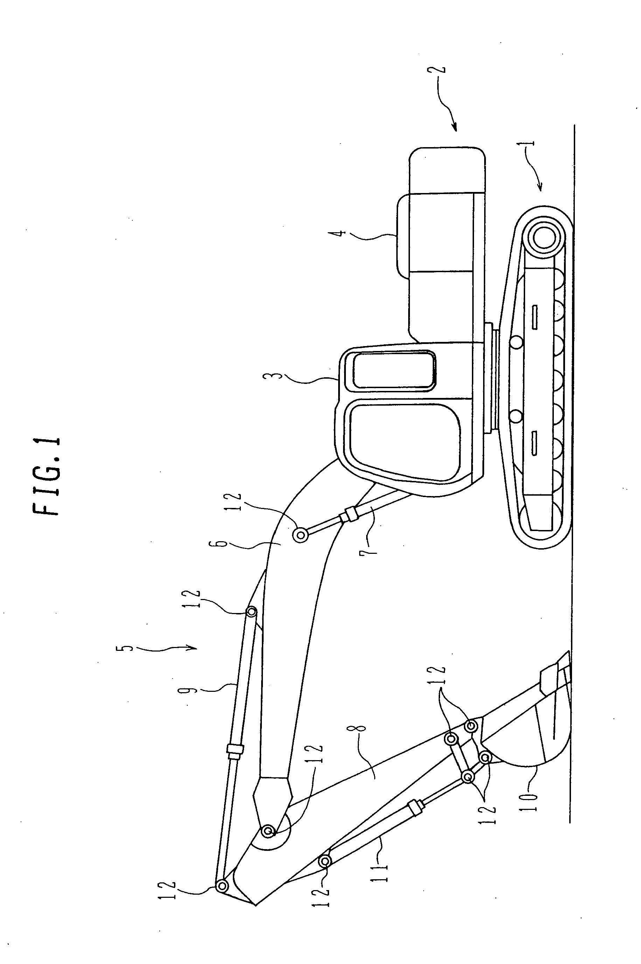

First, one embodiment of the slide bearing assembly and the slide bearing of the present invention will be described below with reference to Figs. 1 through 5.

Fig. 1 is a side view showing an overall structure of a hydraulic excavator equipped with one embodiment of the slide bearing assembly of the present invention.

In Fig. 1, numeral 1 denotes a travel body, and 2 denotes a swing body mounted on the travel body 1 in a swingable manner. Numeral 3 denotes a cab provided on the swing body 2 at one side (left side as viewed in Fig. 1), 4 denotes an engine room provided on the swing body 2 at the other side (right side as viewed in Fig. 1), and 5 denotes a working device provided on the swing body 2 at the same side as the cab 3. The hydraulic excavator comprises mainly the travel body 1, the swing body 2, the cab 3, the engine room 4, and the working device 5.

Further, numeral 6 denotes a boom coupled to the swing body 2 in a vertically rotatable manner, and 7 denotes a boom hydraulic cylinder for driving the boom 6. Numeral 8 denotes an arm rotatably coupled to a fore end of the boom 6, and 9 denotes an arm hydraulic cylinder for driving the arm 8. Numeral 10 denotes a bucket rotatably coupled to a fore end of the arm 8, and 11 denotes a bucket hydraulic cylinder for driving the bucket 10. The working device 5 is constituted by the boom 6, the arm 8, the bucket 10, and the hydraulic cylinders 7, 9 and 11.

Every mutually articulated two among the boom 6, the arm 8, the bucket 10, and the hydraulic cylinders 7, 9 and 11, i.e., among the components of the working device 5, are coupled by a slide bearing assembly 12 in a relatively rotatable or angularly movable manner. Although slide bearing assemblies actually used in the working device 5 differ in size, shape, etc. from one another depending on the locations where the assemblies are installed, it is here assumed that the slide bearing assemblies used in the working device 5 are all the same and collectively called the slide bearing assembly 12.

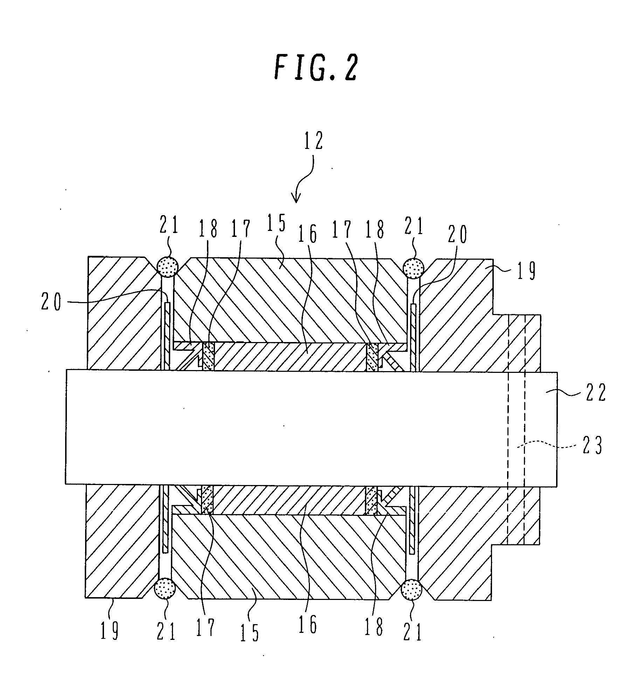

Fig. 2 is a sectional view showing an internal structure of the slide bearing assembly 12 according to this embodiment.

In Fig. 2, numeral 15 denotes a boss, and 16 denotes a bushing fixedly fitted into the boss 15 by shrink fitting, such as thermal or cool fitting. Numerals 17, 17 denote lubricant shield members disposed on both the sides of the bushing 16, and 18, 18 denote dust seals press-fitted in the boss 15 on both the sides of the bushing 16 such that the lubricant shield members 17, 17 are brought into contact with the bushing 16. Numerals 19, 19 denote brackets disposed on both the sides of the boss 15, and 20, 20 denote shims inserted in gaps between the brackets 19, 19 and the boss 15. Numerals 21, 21 denote O-rings fitted to the gaps between the brackets 19, 19 and the boss 15 at the outer peripheral side thereof. Further, numeral 22 denotes a shaft inserted through the brackets 19, 19 and the bushing 16 in sliding relation to the bushing 16, and 23 denotes a rotation check bolt penetrating the shaft 22 and the bracket 19. The rotation check bolt 23 serves to prevent the shaft 22 and the bracket 19 from rotating relative to each other.

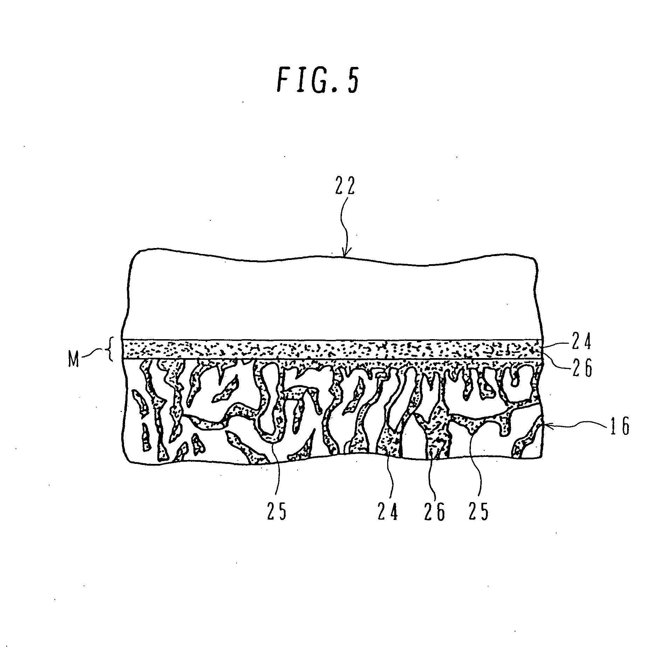

The bushing 16 is made of a porous composite sintered alloy formed using copper powder and iron powder, for example, and has a large number of pores 25 (see Fig. 5 described later) communicating with one another so that the bushing 16 is impregnated with a lubricant 24 (see Fig. 5 described later). In this embodiment, the bushing 16 has a porosity of about 20 vol%, for example. The bushing porosity is preferably in the range of 5 to 30 vol%. The reason is as follows. If the porosity is less than 5 vol%, the content of the lubricant is insufficient (and hence the amount of later-described solid lubricating fine particles intruded into the pores is also insufficient), thus resulting in a possibility that the bushing 16 does not function satisfactorily as an oilless self-lubricating bushing. On the other hand, if the porosity is more than 30 vol%, the mechanical porosity of the bushing 16 itself is reduced. Note that the composite sintered alloy used to form the bushing 16 may be made of other suitable materials than copper powder and iron powder.

In this embodiment, the lubricant 24 having viscosity of, e.g., 460 cSt (at 25.5°C) is impregnated in the bushing 16. The viscosity of the lubricant to be impregnated (more exactly speaking, the viscosity of the lubricant in the state containing the later-described solid lubricating fine particles) is preferably in the range of 56 to 1500 cSt (at 25.5°C). The reason is as follows. If the viscosity exceeds 1500 cSt, the fluidity of the lubricant is reduced, thus resulting in a possibility that a capillary phenomenon acting to return the lubricant having seeped out onto the sliding surface with generated frictional heat into the pores of the bushing 16 again is less likely to occur and a stable sliding characteristic cannot be maintained for a long term. As the lubricant 24, any kind of commercially available lubricants, such as mineral oil or synthetic oil, can be used and the composition of the lubricant is not limited to particular one so long as the viscosity falls in the range mentioned above. However, grease is not adapted for use because it contains fibers and cannot be impregnated in the bushing 16.

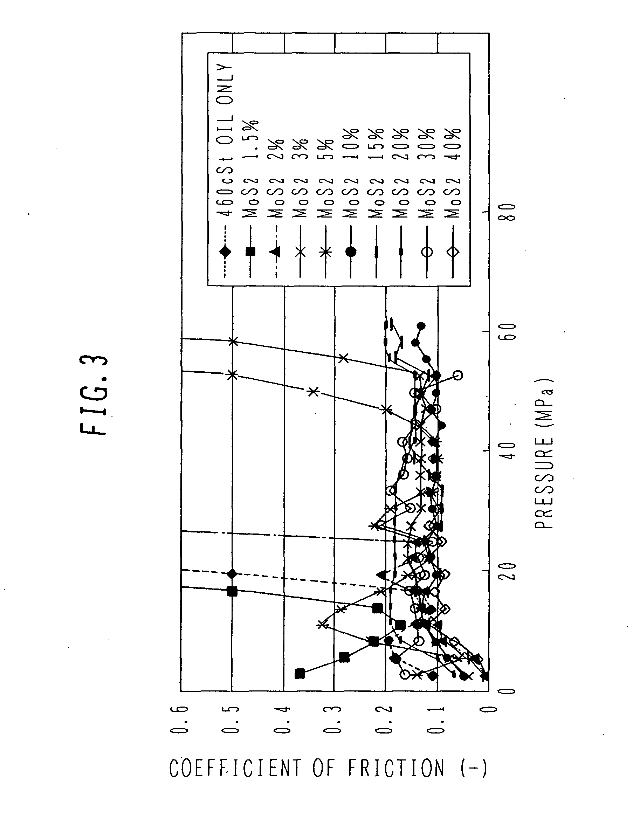

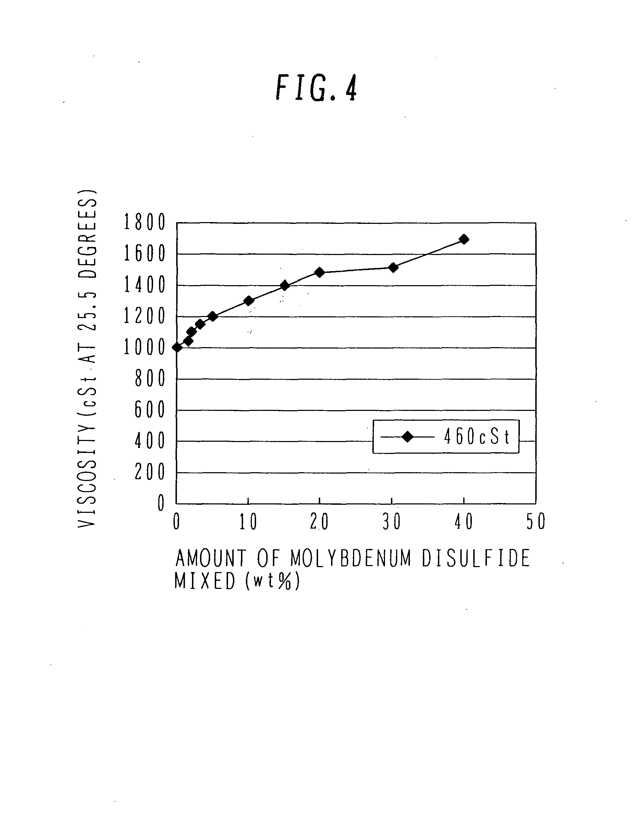

In this embodiment, the lubricant 24 impregnated in the bushing 16 contains, e.g., 20% of the solid lubricating fine particles 26 (see Fig. 5 described later) made of at least one selected from among MoS₂ (molybdenum disulfide), WS₂ (tungsten disulfide), and hexagonal BN (boron nitride). These solid lubricating fine particles 26 are of a layered structure and are forced to slide in a direction in which layers lie, thereby developing a more superior lubricating effect. The content of the solid lubricating fine particles 26 is preferably in the range of 2.0 to 30 wt%. The reason is described below with reference to Figs. 3 and 4.

Fig. 3 is a graph showing a load withstand characteristic of the bushing 16 when the solid lubricating fine particles (made of MoS₂ herein) are contained at various concentrations (weight%) in the lubricant (lubricant with viscosity of 460 cSt herein).

As shown in Fig. 3, when the lubricant containing 1.5% of MoS₂ is used, the load withstand characteristic is slightly reduced in comparison with the case using only the lubricant. However, when the content of MoS₂ is set to 2.0%, the load withstand characteristic is increased in comparison with the case using only the lubricant. When the content of MoS₂ is increased to 3.0 - 5.0%, the load withstand characteristic is further increased. When the content of MoS₂ exceeds 10%, the coefficient of friction is hardly changed even when pressure is increased to 60 MPa, and the load withstand characteristic can be significantly increased. Accordingly, a lower limit of the MoS₂ content is preferably set to 2.0% at which the effect of improving the load withstand characteristic is practically obtainable.

On the other hand, Fig. 4 is a graph showing the relationship between the content of MoS₂ and the viscosity of the lubricant containing MoS₂.

As shown in Fig. 4, when the content of MoS₂ is set to 20%, the lubricant viscosity increases to about 1500 cSt (at 25.5°C). When the content of MoS₂ exceeds 30%, the lubricant viscosity becomes larger than 1500 cSt. In general, if the lubricant viscosity exceeds 1500 cSt, the fluidity of the lubricant is reduced and a difficulty arises in making the porous sintered alloy impregnated with the lubricant. In addition, as described above, a capillary phenomenon acting to return the lubricant having seeped out onto the sliding surface with generated frictional heat into the pores of the bushing 16 again is less likely to occur, which gives rise to a risk of reduction in bearing performance. Accordingly, an upper limit of the MoS₂ content is preferably set to 30% at which the viscosity of the lubricant containing MoS₂ is not larger than about 1500 cSt.

For the reason mentioned above, the content of MoS₂ in the lubricant 24 is preferably in the range of 2.0 to 30 wt%. The particle size of the solid lubricating fine particles (made of MoS₂, WS₂, and hexagonal BN) 26 contained in the lubricant 24 is sufficiently small (e.g., about 0.1 µm - 100 µm) to such an extent that the fine particles are able to smoothly seep out onto the sliding surface from the pores 25 of the bushing 16 and to withdraw from the sliding surface into the pores 25 without clogging the pores 25.

The lubricant 24 containing the solid lubricating fine particles 26 is usually impregnated in the bushing 16 in a manner described below.

First, the solid lubricating fine particles 26 and the lubricant 24 are mixed and stirred sufficiently, thus causing the solid lubricating fine particles 26 to be homogeneously dispersed in the lubricant 24. Thereafter, the mixture is heated to reduce the viscosity of the lubricant 24 such that the lubricant 24 is liquefied. The bushing 16 is then immersed in the lubricant 24 containing the solid lubricating fine particles 26 and is left to stand in a vacuum atmosphere.

In that state, air in the pores 25 of the bushing 16 is drawn out and the lubricant 24 containing the solid lubricating fine particles 26 is drawn into the pores 25 instead. After the lubricant 24 has been impregnated into the pores 25 in such a way, the bushing 16 is taken out into air and is left to stand for cooling to the room temperature. The lubricant 24 containing the solid lubricating fine particles 26 restores the viscosity to its original value and hence loses fluidity in the pores 25 of the bushing 16. As a result, the lubricant 24 containing the solid lubricating fine particles 26 can be kept remained in the pores 25 of the bushing 16.

The heating temperature of the lubricant 24 containing the solid lubricating fine particles 26 is not limited to a particular value. While the heating temperature must be changed depending on the viscosity of the lubricant 24 used, it is just required to heat the lubricant 24 to such a level at which the lubricant 24 is caused to liquefy. However, when the solid lubricating fine particles 26 are made of resin materials such as polyethylene, polyimide, polyacetal and PTFE (polytetrafluoroethylene), the heating temperature must be lower than the heat-resistant temperature of the resin used. The immersion time of the bushing 16 in the lubricant 24 containing the solid lubricating fine particles 26 and the degree of vacuum under which the bushing 16 is left to stand are also not limited to particular values. While settings of those parameters are changed depending on the viscosity of the lubricant 24 used, the immersion time must be set such that the pores 25 of the bushing 16 are saturated with the lubricant 24 containing the solid lubricating fine particles 26. For example, when the lubricant containing the solid lubricating fine particles and having the viscosity of 460 cSt is heated to temperature of about 60°C - 80°C and the bushing is immersed in the lubricant under a vacuum of 2 × 10⁻² mmHg, about 1 hour is required until the pores of the bushing are saturated with the lubricant containing the solid lubricating fine particles.

The shaft 22 is made of a steel material. The surface (outer circumferential surface) of the shaft is subjected to surface modification treatment by performing at least one kind of treatment selected from among carburizing, induction hardening, laser hardening and nitriding, and then chemical conversion (using, e.g., zinc phosphate or manganese phosphate) or sulfurizing treatment. By thus performing the surface modification treatment on the shaft 22 using an extreme-pressure additive such as Zn (zinc), Mn (manganese) or S (sulfur), "wetting" with respect to the lubricant 24 impregnated in the bushing 16 is improved, whereby the lubricating effect and tribological characteristics can be improved.

As with the surface of the shaft 22, the surface (inner circumferential surface) of the bushing 16 sliding relative to the shaft 22 may also be subjected to surface modification treatment, such as carburizing, hardening, nitriding, and sulfurizing. The wear resistance of the bushing 16 can be increased, for example, by forming a carburized layer with a thickness of about 1 mm - 3 mm (preferably 2 mm) on the sliding surface of the bushing 16.

The bushing 16 in the above description constitutes a slide bearing set forth in claims 7 through 14 and also constitutes a bearing for a front component of an excavator set forth in claim 13.

The operation and advantages of one embodiment of the slide bearing assembly and the slide bearing of the present invention will be described below with reference to Fig. 5. Fig. 5 is a schematic partial sectional view, in an enlarged scale, of the bushing 16 and the shaft 22 in the vicinity of their sliding surfaces.

As shown in Fig. 5, when the shaft 22 and the bushing 16 slide relative to each other, the lubricant 24 impregnated in the pores 25 of the bushing 16 is caused to seep out onto the inner circumferential surface of the bushing 16 with generated frictional heat, thereby forming a thin lubricant film M. At this time, the solid lubricating fine particles 26 contained in the lubricant 24 are also caused to move onto the inner circumferential surface of the bushing 16. Thus, the solid lubricating fine particles 26 come into a sliding interface between the bushing 16 and the shaft 22 together with the lubricant 24, and fine layers constituting the solid lubricating fine particles 26 slide in the layer lying direction so as to develop a superior lubricating effect. When the relative sliding of the shaft 22 and the bushing 16 is stopped, the lubricant 24 forming the thin lubricant film M in the sliding interface is drawn back into the large number of pores 25 of the bushing 16 based on the capillary phenomenon together with the solid lubricating fine particles 26. Because the fluidity of the lubricant 24 impregnated in the pores 5 is very low, the spilling-out loss of the lubricant 24 and the solid lubricating fine particles 26 is very small even when the shaft 22 and the bushing 16 repeat the sliding. As a result, the period during which the lubricant 24 containing the solid lubricating fine particles 26 can be supplied with stability is prolonged to a comparatively long period (e.g., 5 years).

With the above-mentioned slide bearing assembly of the related art, as a comparative example, in which the lubricant 24 does not contain the solid lubricating fine particles 26, when the shaft and the bushing slide just several millimeters, i.e., angularly move in a very small stroke, or slide at a very low speed relative to each other, the lubricating effect cannot be developed at a sufficient level because the amount of generated frictional heat is very small. This may raise local surface pressure and cause local abrasion or damage, such as "scratching", in the surface of the shaft 22 or the inner circumferential surface of the bushing 16 with accompanying abnormal noise.

In contrast, with the slide bearing assembly 12 of this embodiment, superior tribological characteristics are obtained with the lubricating effect of the solid lubricating fine particles 26 contained in the lubricant 24. Further, by setting the content of the solid lubricating fine particles 26 to fall in the range of 2.0 to 30 wt%, as seen from Fig. 3 described above, a superior effect of improving the load withstand characteristic can be obtained. Consequently, even under a situation of sliding at a very low speed or angular motion in a very small stroke, it is possible to not only suppress local abrasion or damage of the surface of the shaft 22 and the inner circumferential surface of the bushing 16 caused by scratching, etc. and accompanying abnormal noise, but also to prolong the period during which the sliding operation can be continued in the oilless self-lubricating state.

Further, with this embodiment, because the viscosity of the lubricant 24 changes depending on temperature, the lubricating effect of the lubricant 24 is highly dependent on temperature. On the other hand, the lubricating effect of the solid lubricating fine particles 26 is less dependent on temperature. Accordingly, even when a hydraulic excavator is employed in, e.g., a cold district, the slide bearing assembly 12 is able to sufficiently develop the lubricating effect.

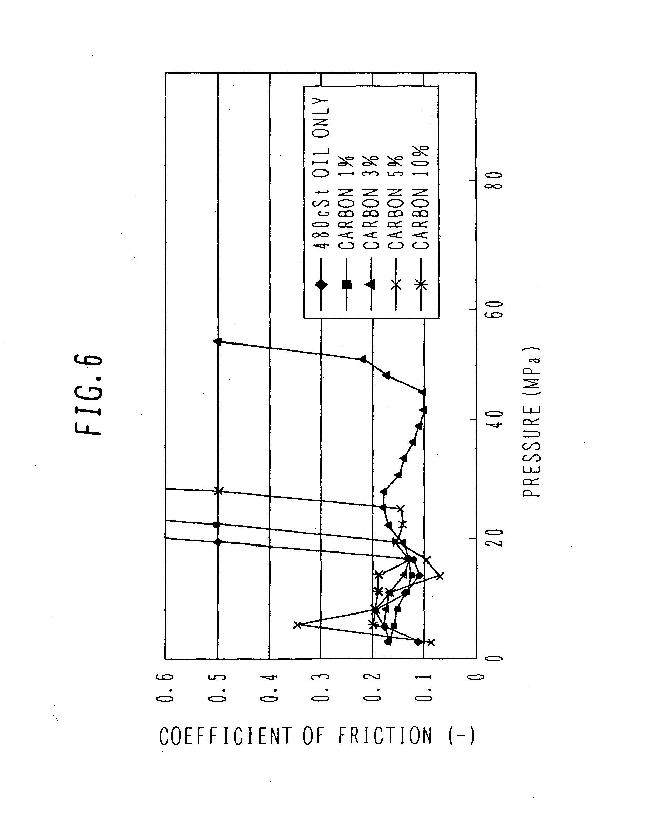

Another embodiment of the slide bearing assembly and the slide bearing of the present invention will be described below with reference to Fig. 6. While in the above-described one embodiment the lubricant 24 contains 20% of the solid lubricating fine particles 26 made of at least one selected from among MoS₂, WS₂, and hexagonal BN, the lubricant 24 used in this embodiment contains, e.g., 3.0% of solid lubricating fine particles 26' made of graphite.

While in this embodiment the solid lubricating fine particles 26' made of graphite are contained at 3.0%, by way of example, in the lubricant 24, the content of the solid lubricating fine particles 26' is preferably in the range of 3.0 to 5.0 wt%. The reason is explained below with reference to Fig. 6.

Fig. 6 is a graph showing a load withstand characteristic of the bushing 16 when the solid lubricating fine particles (solid lubricating fine particles made of graphite (carbon) herein) are contained at various concentrations (weight%) in the lubricant (lubricant with viscosity of 460 cSt herein).

As shown in Fig. 6, when the lubricant containing 1.0% or 10% of graphite (carbon) is used, the load withstand characteristic is not appreciably changed in comparison with the case using only the lubricant. However, when the graphite content is set to 3.0%, the coefficient of friction is hardly changed even when pressure is increased to 45 MPa, and the load withstand characteristic can be significantly increased. Also, when the graphite content is set to 5.0%, the load withstand characteristic is improved in comparison with the case using only the lubricant. From that result, the graphite content is preferably in the range of 3.0 to 5.0 wt%.

As in the above-described one embodiment, the particle size of the solid lubricating fine particles 26' contained in the lubricant 24 is sufficiently small (e.g., about 0.1 µm - 100 µm) to such an extent that the fine particles are able to smoothly seep out onto the sliding surface from the pores 25 of the bushing 16 and to withdraw from the sliding surface into the pores 25 without clogging the pores 25.

With the slide bearing assembly 12 of this embodiment, too, superior tribological characteristics are obtained with the lubricating effect of the solid lubricating fine particles 26' contained in the lubricant 24. Further, by setting the content of the solid lubricating fine particles 26' to fall in the range of 3.0 to 5.0 wt%, as seen from Fig. 6 described above, a superior effect of improving the load withstand characteristic can be obtained. Consequently, even under a situation of sliding at a very low speed or angular motion in a very small stroke, it is possible to not only suppress local abrasion or damage of the surface of the shaft 22 and the inner circumferential surface of the bushing 16 caused by scratching, etc. and accompanying abnormal noise, but also to prolong the period during which the sliding operation can be continued in the oilless self-lubricating state. As with the above-described one embodiment, since the lubricating effect of the solid lubricating fine particles 26' is less dependent on temperature. Accordingly, even when a hydraulic excavator is employed in, e.g., a cold district, the slide bearing assembly 12 is able to sufficiently develop the lubricating effect.

Additionally, the slide bearing assembly 12 according to any of the above-described two embodiments is suitably used under conditions of high surface pressure not lower than 6 kgf/mm² and high PV factor not lower than 1.0 kgfom/mm2.s. Therefore, the present invention is applicable to not only a bearing for a front component of an excavator, such as the above-described slide bearing assembly 12 for use in the working device 5 of the hydraulic excavator, but also to any types of bearings used under conditions of low speed and high surface pressure, such as an arm bearing of a crane, a roller gate bearing of a dam floodgate, upper and lower slide cam bearings of a pressing die, a guide propeller bearing of a water turbine for hydroelectric power generation, and an unloader pin bearing of a seaborne crane.

### Industrial Applicability

According to the invention set forth in claim 1, a bushing made of a porous sintered material is impregnated with a lubricant containing 2.0% to 30 wt% of solid lubricating fine particles made of at least one selected from among MoS₂, WS₂, and hexagonal BN. Therefore, a superior effect of improving the load withstand characteristic can be obtained while suppressing an increase of viscosity of the lubricant. As a result, even under a situation of sliding at a very low speed or angular motion in a very small stroke, it is possible to not only suppress local abrasion or damage of the surface of the shaft 22 and the inner circumferential surface of the bushing 16 caused by scratching, etc. and accompanying abnormal noise, but also to prolong the period during which sliding operation can be continued in the oilless self-lubricating state.

Also, according to the invention set forth in claim 2, a bushing made of a porous sintered material is impregnated with a lubricant containing 3.0% to 5.0 wt% of solid lubricating fine particles made of graphite. Therefore, a superior effect of improving the load withstand characteristic can be obtained while suppressing an increase in viscosity of the lubricant. As a result, even under a situation of sliding at a very low speed or angular motion in a very small stroke, it is possible to not only suppress local abrasion or damage of the surface of the shaft 22 and the inner circumferential surface of the bushing 16 caused by scratching, etc. and accompanying abnormal noise, but also to prolong the period during which sliding operation can be continued in the oilless self-lubricating state.

## Claims

1. A slide bearing assembly (12) comprising at least a shaft (22) and a bushing (16), said bushing (16) being made of a porous sintered material having a large number of pores (25), wherein said bushing (16) is impregnated with a lubricant (24) containing 2.0 to 30 wt% of solid lubricating fine particles (26) made of at least one selected from among MoS₂, WS₂, and hexagonal BN, and wherein said shaft (22) and said bushing (16) are used at surface pressure not lower than 6 Kgf/mm² and sliding speed in the range of 2 to 5 cm/sec.

2. A slide bearing assembly (12) comprising at least a shaft (22) and a bushing (16), said bushing (16) being made of a porous sintered material having a large number of pores (25), wherein said bushing (16) is impregnated with a lubricant (24) containing 3.0 to 5.0 wt% of solid lubricating fine particles (26) made of graphite, and wherein said shaft (22) and said bushing (16) are used at surface pressure not lower than 6 Kgf/mm² and sliding speed in the range of 2 to 5 cm/sec.

3. A slide bearing assembly according to Claim 1 or 2, wherein viscosity of the lubricant (24) containing the solid lubricating fine particles (26) is in the range of 56 to 1500 cSt (at 25.5°C).

4. A slide bearing assembly according to Claim 1 or 2, wherein said bushing (16) is made of a composite sintered alloy with a porosity of 5 to 30 vol%, said large number of pores (25) are communicated with one another, and said bushing (16) is subjected to surface modification treatment using at least one selected from among carburizing, nitriding, and sulphurize-nitriding.

5. A slide bearing assembly according to Claim 1 or 2, wherein the solid lubricating fine particles (26) have sizes being small enough to prevent clogging of the pores (25) of said bushing (16).

6. A slide bearing assembly according to Claim 1 or 2, wherein said shaft (22) is subjected to surface modification treatment by performing at least one kind of treatment selected from among carburizing, induction hardening, laser hardening and nitriding, and then chemical conversion or sulfurizing treatment.

7. A slide bearing made of a porous sintered material having a large number of pores (25) and impregnated with a lubricant containing 2.0 to 30 wt% of solid lubricating fine particles (26) made of at least one selected from among MoS₂, WS₂, and hexagonal BN, said bearing being used at surface pressure not lower than 6 Kgf/mm² and sliding speed in the range of 2 to 5 cm/sec.

8. A slide bearing made of a porous sintered material having a large number of pores (25) and impregnated with a lubricant containing 3.0 to 5.0 wt% of solid lubricating fine particles (26) made of graphite, said bearing being used at surface pressure not lower than 6 Kgf/mm² and sliding speed in the range of 2 to 5 cm/sec.

9. A slide bearing according to Claim 7 or 8, wherein viscosity of the lubricant (24) containing the solid lubricating fine particles (26) is in the range of 56 cSt to 1500 cSt (at 25.5°C).

10. A slide bearing according to Claim 7 or 8, wherein said bearing is made of a composite sintered alloy with a porosity of 5 to 30 vol%, said large number of pores (25) are communicated with one another, and said bearing is subjected to surface modification treatment using at least one selected from among carburizing, nitriding, and sulphurize-nitriding.

11. A slide bearing according to Claim 7 or 8, wherein the solid lubricating fine particles (26) have sizes being small enough to prevent clogging of the pores (25).

12. A slide bearing according to Claim 7 or 8, wherein said bearing is used in combination with a shaft (22) subjected to surface modification treatment by performing at least one kind of treatment selected from among carburizing, induction hardening, laser hardening and nitriding, and then chemical conversion or sulfurizing treatment.

13. A slide bearing according to Claim 7 or 8, wherein said bearing is used as a bearing for a front component of an excavator.

14. A slide bearing according to Claim 7 or 8, wherein said bearing is used as a bearing for an arm of a crane.
